# EUROPÄISCHE PATENTSCHRIFT

(11) **EP 2 095 370 B1**
(45) Veröffentlichungstag und Bekanntmachung des Hinweises auf die Patenterteilung: **28.03.2012**
(21) Anmeldenummer: 07819411.5
(22) Anmeldetag: 29.10.2007
(51) Int. Cl.: G21C 15/16, G21C 19/307, B01D 19/00

(54) **KERNTECHNISCHE ANLAGE UND VERFAHREN ZUM BETREIBEN EINER KERNTECHNISCHEN ANLAGE**
NUCLEAR ENGINEERING PLANT AND METHOD FOR OPERATING A NUCLEAR ENGINEERING PLANT
INSTALLATION TECHNIQUE NUCLÉAIRE ET PROCÉDÉ D'UTILISATION D'UNE INSTALLATION TECHNIQUE NUCLÉAIRE

(30) Priorität: 24.11.2006 DE 102006055966
(43) Veröffentlichungstag der Anmeldung: 02.09.2009
(73) Patentinhaber: Areva NP GmbH, 91052 Erlangen (DE)
(72) Erfinder: MEINTKER, Manfred, 91096 Möhrendorf (DE)
(74) Vertreter: Tergau & Walkenhorst
(86) Internationale Anmeldenummer: PCT/EP2007/009369
(87) Internationale Veröffentlichungsnummer: WO 2008/061609

(56) Entgegenhaltungen:
- EP-A- 0 150 981
- US-A- 4 043 865
- US-A- 4 710 212
- US-A- 5 294 303
- AGRAWAL R ET AL: "HEAT PUMPS FOR THERMALLY LINKED DISTILLATION COLUMNS: AN EXERCISE FOR ARGON PRODUCTION FROM AIR" INDUSTRIAL & ENGINEERING CHEMISTRY RESEARCH, AMERICAN CHEMICAL SOCIETY. WASHINGTON, US, Bd. 33, Nr. 11, 1994, Seiten 2717-2730, XP009061446 ISSN: 0888-5885

## Beschreibung

Die Erfindung betrifft eine kerntechnische Anlage mit einem Druckwasserreaktor und eine Entgasungsanlage für Reaktorkühlmittel, die eine vom Reaktorkühlmittel durchströmbare Entgaserkolonne aufweist, wobei die Entgasungsanlage einen Kühlmittelverdampfer mit einem ersten Wärmetauscher und einen Stripdampfkondensator mit einem zweiten Wärmetauscher umfasst, wobei der Wärmetau scher des Kühlmittelverdampfers sekundärseitig von einem Teilstrom des Reaktorkühlmittels durchströmt ist, und wobei der Wärmetauscher des Stripdampfkondensators primärseitig in eine an die Entgaserkolonne angeschlossene Dampf- und Gasaustrittsleitung geschaltet ist. Die Erfindung bezieht sich ferner auf ein Verfahren zum Betreiben einer derartigen kerntechnischen Anlage.

Im Reaktorkühlmittel von Druckwasserreaktoren befindet sich betriebsbedingt gelöstes, nicht kondensierbares Gas, zum Beispiel Wasserstoff, Sauerstoff, Stickstoff und verschiedene radioaktive Edelgase, wie zum Beispiel ⁸⁵Kr, ¹³³Xe. Je nach Betriebszustand der Reaktoranlage ist das Vorhandensein dieser Gase im Kühlmittel entweder erforderlich und beabsichtigt oder ohne wesentliche Bedeutung oder aber schädlich beziehungsweise unerwünscht und daher zu verhindern.

Folgende Beispiele sollen dies näher erläutern:

Gelöster Wasserstoff (H₂) ist während des Leistungsbetriebs des Reaktors in einer Konzentration von zum Beispiel 2 ppm bis 4 ppm erforderlich, um die Konzentration des in diesem Betriebszustand schädlichen (weil Korrosion verursachenden) Sauerstoffs auf ein Minimum zu begrenzen. Vor dem Abfahren des Reaktors zur Revision muss aber der Wasserstoff entfernt werden, um einerseits die für diesen Zustand geforderte chemische Konditionierung des Kühlmittels zu ermöglichen und andererseits Explosionsrisiken beim Öffnen des Reaktorkühlkreislaufs zu vermeiden.

Während der Revision des Reaktors löst sich Sauerstoff nahezu bis zur Sättigungsgrenze (ca. 8 ppm) im Reaktorkühlmittel, was in diesem Zustand ohne Belang ist, da er weder nützt noch schadet. Bei der Wiederinbetriebnahme des Reaktors nach der Revision allerdings ist Sauerstoff nur noch in sehr geringer Konzentration (zum Beispiel 5 ppb) zulässig, da er unter Betriebsbedingungen des Reaktorkühlkreislaufs möglicherweise eine unzulässige Korrosion der Strukturmaterialien verursachen würde.

Das Vorhandensein von Stickstoff, der zum Beispiel aus dem Gaspolster in verschiedenen Behältern und Apparaten, in denen das Reaktorkühlmittel gehandhabt wird, in das Reaktorkühlsystem eingetragen wird, wird von vielen Fachleuten als unbedeutsam angesehen. Andere wiederum halten erhöhte Stickstoffkonzentrationen für unerwünscht, weil sie einerseits eine Wechselwirkung mit dem Hüllrohrwerkstoff der Brennelemente nicht ausschließen, und da andererseits auch ein geringer, negativer Einfluss auf die Ionentauscher in der Kühlmittelreinigungsanlage vorhanden sein kann.

Die im Kühlmittel gelösten, aus der Kernspaltung im Reaktor herstammenden radioaktiven Edelgase sind während des Leistungsbetriebs der Reaktoranlage ohne Bedeutung, da sie chemisch inaktiv sind und die von ihnen ausgehende radioaktive Strahlung durch die ohnehin vorhandene Abschirmung ausreichend absorbiert wird. Bei Wartungs- oder Reparaturarbeiten an der Reaktoranlage sind sie aber wegen der von ihnen ausgehenden Strahlung hinderlich. Besonders beim Öffnen des Reaktordeckels kann es zur Freisetzung dieser Edelgase in die Umgebungsluft kommen, was eine Räumung des Reaktorcontainments zum Schutz des Personals erforderlich macht. Es ist daher wünschenswert, beim Abfahren des Reaktors zur Revision diese radioaktiven Edelgase aus dem Kühlmittel zu entfernen.

Aus den oben genannten Gründen ist es daher erforderlich, den Gehalt des Reaktorkühlmittels an gelösten, nicht kondensierbaren Gasen zu kontrollieren. Dafür sind in Kernkraftwerken mit Druckwasserreaktoren verschiedene Einrichtungen vorhanden, mit denen es einerseits möglich ist, verschiedene Gase (insbesondere Wasserstoff) in das Kühlmittel einzuleiten, oder auf der anderen Seite dem Kühlmittel gelöstes Gas zu entziehen. Die Einrichtungen zum Hinzufügen von Gas sind nicht Gegenstand dieser Erfindung und werden deswegen hier nicht weiter erläutert. Gegenstand der Erfindung ist vielmehr ein besonders energieeffizientes Konzept für den Entzug von gelöstem Gas aus dem Kühlmittel.

Grundsätzliche Anmerkungen zur Verfahrenstechnik, Strahlenschutzmaßnahmen, Betrieb, Instandhaltung und Überwachung von Primärkühlmittelentgasungsanlagen sind zum Beispiel in der Deutschen Industrienorm DIN 25476 enthalten.

Beispielsweise wird zum Entzug von gelöstem Gas in vielen Druckwasserreaktoranlagen der im Volumenregelsystem vorhandene Volumenausgleichsbehälter verwendet. Das aus dem Reaktorkühlkreislauf entnommene Reaktorkühlmittel wird oberhalb des Wasserspiegels im Volumenausgleichsbehälter versprüht und nimmt dabei bezüglich der Konzentration der in ihm gelösten Gase nahezu einen Gleichgewichtszustand mit der im Behälter oberhalb des Flüssigkeitsspiegels vorhandenen Gasatmosphäre an. Soweit diese Gasatmosphäre ursprünglich frei von Sauerstoff ist, erfolgt bei dem Sprühvorgang eine Verringerung der Sauerstoffkonzentration in dem sich am Boden des Volumenausgleichsbehälters sammelnden Reaktorkühlmittel. Damit kann beispielsweise durch Bereitstellen einer reinen Wasserstoffatmosphäre beim Anfahren des Reaktors dem Reaktorkühlmittel Sauerstoff entzogen werden. Wenn im Volumenausgleichsbehälter eine reine Stickstoffatmosphäre vorhanden ist, kann dem Kühlmittel auf die beschriebene Weise Wasserstoff entzogen werden. Diese Variante kommt daher beim Abfahren des Reaktors zur Revision zur Anwendung. Das derart behandelte Kühlmittel wird anschließend mit den Förderpumpen des Volumenregelsystems wieder in den Reaktorkühlkreislauf eingespeist, so dass dort wie gewünscht die Konzentration der betreffenden Art von gelöstem Gas reduziert ist. Dieser Prozess hat allerdings nur eine vergleichsweise geringe Wirksamkeit und führt häufig zu Verzögerungen im Betrieb des Kraftwerks, da die spezifizierten Werte der maximalen Gaskonzentration nicht rechtzeitig erreicht werden. Gewünscht sind nämlich meist Zeitspannen von weniger als einem Tag für die erforderlichen Änderungen im Gasgehalt, die sich mit dem beschriebenen Verfahren kaum einhalten lassen.

Bei einem anderen Typ von Druckwasserreaktoranlagen wird für den Entzug von gelöstem Gas aus dem Reaktorkühlmittel eine speziell für diesen Zweck vorgesehene Entgaserkolonne eingesetzt, die einen Dekontfaktor für die nicht kondensierbaren Gase von > 100 aufweist. Der Dekontfaktor bezeichnet das Verhältnis zwischen den Konzentrationen am Eintritt und am Austritt der Apparatur. Dabei wird das zu entgasende Kühlmittel in den Kopf einer Entgaserkolonne, typischerweise einer Glockenbodenkolonne, eingespeist. In dieser Kolonne rieselt es durch Gravitation von oben nach unten herunter, während gleichzeitig vom Kolonnensumpf her Dampf von unten nach oben aufsteigt. Dieser Dampf wird durch Verdampfung eines Teils - typischerweise 5% des Nenndurchsatzes durch die Kolonne - des im Kolonnensumpf sich sammelnden Kühlwassers in einem unten an die Kolonne angeschlossenen Verdampfer erzeugt. Durch die Wirkung der Apparatur ist das Kühlwasser im Kolonnensumpf entgast und der im Verdampfer erzeugte Dampf daher geeignet, um als so genannter Stripdampf die entgasende Wirkung auf das herabrieselnde Kühlwasser auszuüben beziehungsweise zu verstärken. Beim Passieren eines jeden Glockenbodens tritt nämlich das herabrieselnde Kühlwasser durch die Wirkung der Glocken in intensiven Kontakt mit dem aufsteigenden Stripdampf, wodurch das in Lösung befindliche Gas aus dem Wasser austritt und gemeinsam mit dem Dampf sich nach oben zum Kopf der Kolonne bewegt. Das heißt, der Stripdampf und die nicht kondensierbaren Gase bewegen sich in der Entgaserkolonne im Gegenstrom zum (flüssigen) Reaktorkühlwasser.

Für die Erzielung einer möglichst optimalen Wirkung des Entgasungsprozesses ist es vorteilhaft, dass das zu entgasende Medium bereits bei der Einspeisung in den Kolonnenkopf eine Temperatur aufweist, die der Siedetemperatur gemäß dem für den Trennprozess in der Kolonne gewählten Druck entspricht. Der Prozess wird vervollständigt, indem der Dampfanteil in dem am Kolonnenkopf nach oben austretenden Dampf-Gas-Gemisch kondensiert wird und das Kondensat in den Kolonnenkopf zurückgeführt wird, während das übrig bleibende, nicht kondensierbare Gas aus dem Kondensator abgeleitet, anschließend durch weiteres Kühlen getrocknet und zur weiteren Behandlung an ein geeignetes Abgassystem weitergeleitet wird. Wie bei den weiter oben beschriebenen Systemen mit Gasentzug im Volumenausgleichsbehälter wird das entgaste Kühlmittel nach dem Entgasungsprozess mit den Förderpumpen des Volumenregelsystems in den Reaktorkühlkreislauf zurückgefördert und bewirkt dort die gewünschte Verminderung der gelösten nicht kondensierbaren Gase. Die Wirkung auf das Kühlmittel im Reaktorkühlkreislauf wird gewöhnlich dann als besonders gut angesehen, wenn zum einen ein Dekontfaktor von >100 erzielt wird, und zum anderen der Anteil des im Reaktorkühlkreislauf vorhandenen Kühlmittelinventars, der pro Stunde auf diese Art und Weise entgast wird, etwa 20% der Gesamtmenge beträgt.

Wie sich aus der obigen Beschreibung ergibt, sind für den Entgasungsprozess der Einsatz von Energie zur Verdampfung von Kühlmittel am Sumpf der Kolonne, das heißt zur Stripdampferzeugung, einerseits und die Ableitung einer entsprechenden Menge von Energie aus dem Kondensator am Kolonnenkopf andererseits erforderlich. Wenn das aus dem Reaktorkühlkreislauf entnommene Kühlmittel der Entgaserkolonne nicht mit der Siedetemperatur entsprechend dem in ihrem Inneren herrschenden Kolonnendruck zuläuft, so ist außerdem noch Energie zum Aufwärmen bis zu dieser Temperatur und eine entsprechende Kühlung am Ende des Prozesses erforderlich. Der genannte Energiezufuhr- beziehungsweise Kühlbedarf führt je nach Größe des Reaktorkühlsystems zu erheblichen Wärmeleistungen der genannten Verdampfer beziehungsweise Kondensatoren. Eine erste Ausführung des beschriebenen Entgasungssystems wurde zum Beispiel in den Druckwasserreaktoranlagen Neckarwestheim I (Deutschland) und Gösgen (Schweiz) eingebaut. Es arbeitet in etwa bei Atmosphärendruck (1 bar absolut), so dass die Verdampfungstemperatur für das Kühlmittel bei ca. 100°C liegt. Für die Aufwärmung des Kühlwassers von der Zulauftemperatur aus dem Volumenregelsystem von rund 50°C bis zur erforderlichen Eintrittstemperatur in den Kolonnenkopf von 100°C muss zusätzlich zur Verdampfungsleistung noch erhebliche Wärmeleistung aufgebracht werden. Für nachfolgende Reaktoranlagen mit noch größeren Reaktorkühlkreisläufen wurde daher an den Kolonnenkopf der Entgasungsanlage, in Flussrichtung hinter den genannten Kondensator- und Gaskühler eine Evakuierungspumpe angeschlossen, mit der der Druck in der Kolonne so weit abgesenkt wird, nämlich auf etwa 0,125 bar absolut, dass sich das mit ca. 50°C zulaufende Kühlmittel bereits ohne weitere Vorwärmung im Siedezustand befindet. Damit wird eine erhebliche Energieeinsparung gegenüber der oben beschriebenen, ursprünglichen Ausführung des Entgasungssystems erzielt.

Dennoch bleibt auch beim Einsatz einer Vakuumentgasungsanlage der energetische Aufwand für den Betrieb beträchtlich. Beispielsweise beträgt bei einer für eine thermische Gesamtleistung von 4.000 MW bis 4.500 MW ausgelegten Druckwasserreaktoranlage die thermische Leistung sowohl des Verdampfers als auch des Kondensators etwa 2,3 MW bis 2,5 MW. Die Zufuhr dieser Leistung erfolgt bei den bislang ausgeführten Kraftwerksanlagen aus dem dort vorhandenen Hilfsdampfnetz aus dem konventionellen Teil der Anlage; die Ableitung der Leistung aus dem Kondensator und dem Gaskühler wird mit dem nuklearen Zwischenkühlkreislauf bewerkstelligt. Bei neueren, derzeit im Bau befindlichen Kernkraftwerken vom Reaktortyp EPR (European Pressurized Water Reactor) ist innerhalb des nuklearen Teils der Anlage kein Hilfsdampfversorgungssystem mehr vorgesehen. Dort wird der Leistungsbedarf für den Verdampfer der Entgasungsanlage über eine elektrische Widerstandsheizung gedeckt. Die Ableitung der Wärmeleistung aus dem Kondensator erfolgt wie zuvor mit Hilfe des nuklearen Zwischenkühlkreislaufs.

Eine Entgasungsanlage für einen Druckwasserreaktor ist aus der Offenbarungsschrift US-A-4 043 865 bekannt. Weiterhin ist eine Entgasungsanlage, bei der die bei der Stripdampf-Kondensation freigesetzte Wärme zumindest zum Teil auf das den Kühlmittelverdampfer durchströmende Medium übertragen wird, ist aus der Offenbarungsschrift US-A-5 294 303 bekannt.

Sämtliche der bisher realisierten oder konzipierten Varianten des Entgasungssystems erfordern damit erheblichen anlagentechnischen Aufwand für die Zufuhr und Abfuhr der beim Entgasungsprozess eingesetzten Wärme. Weiterer Aufwand ist erforderlich, um die Wärmeverluste der eingesetzten Anlagenteile mit Hilfe des nuklearen Lüftungssystems aus der Raumluft abzuführen. Bei der elektrisch beheizten Variante der Entgasungsanlage gilt das besonders auch für die Abwärme des in der Nähe der Entgasungsanlage angeordneten Transformators, der für den Betrieb der Heizelemente zur Spannungsversorgung benötigt wird. Bei Kernkraftwerken, an deren Standort das Nebenkühlwasser, an das der nukleare Zwischenkühlkreis die aufgenommene Wärme abgibt, eine vergleichsweise hohe Temperatur von zum Beispiel 31°C oder noch mehr hat, tritt ein weiterer Nachteil der bisherigen Entgasungsanlagen in Erscheinung, der mit der hohen abzuführenden Wärmeleistung aus dem Kondensator zusammenhängt: Der Strang des nuklearen Zwischenkühlsystems, der den Kondensator der Entgasungsanlage versorgt, wird nämlich beim Abfahren der Anlage auch zur Abfuhr der Nachwärme des abgeschalteten Reaktors benötigt. Mit anderen Worten: Die Wärmeabfuhr aus dem Reaktorkühlkreislauf über den Nachwärmekühler und der Betrieb der Entgaseranlage mit Wärmeabfuhr aus dem Kondensator sind zur gleichen Zeit parallel mit demselben Strang des Zwischenkühlsystems zu bewältigen. Bei den genannten hohen Nebenkühlwassertemperaturen führt dies dazu, dass die bislang übliche, auf niedrige Nebenkühlwassertemperaturen abgestimmte Auslegung und Dimensionierung des Zwischenkühlkreislaufs nicht mehr ausreicht. Die Temperatur des Reaktorkühlsystems kann dann nicht mehr in der geforderten Zeit auf die für die Revision geforderten, vergleichsweise niedrigen Werte abgesenkt werden, oder aber es ist eine unverhältnismäßige Vergrößerung der Komponenten, Rohrleitungen und Armaturen des Zwischenkühlsystems erforderlich.

Der vorliegenden Erfindung liegt daher die Aufgabe zugrunde, eine Entgasungsanlage der eingangs genannten Art anzugeben, die bei möglichst einfach gehaltenem Aufbau und unter Beachtung einschlägiger Sicherheitsvorschriften eine besonders effektive und zugleich energieeffiziente Abtrennung von im Reaktorkühlmittel gelösten nicht kondensierbaren Gasen ermöglicht, wobei ferner die thermische Belastung des zugeordneten nuklearen Zwischenkühlsystems möglichst gering gehalten sein soll. Es soll weiterhin eine kerntechnische Anlage und ein entsprechendes Verfahren zum Betreiben einer kerntechnischen Anlage angegeben werden.

In Bezug auf die Entgasungsanlage wird die genannte Aufgabe durch eine Anlage nach Anspruch 1 oder 2 gelöst.

Die Erfindung geht von der Überlegung aus, dass für einen besonders energieeffizienten Betrieb einer Entgasungsanlage in einer kerntechnischen Anlage mit einem Druckwasserreaktor die zur Stripdampferzeugung benötigte Verdampfungswärme zumindest zum Teil am Kondensator der Entgasungsanlage zurückgewonnen und dem Verdampfer zugeführt werden sollte. Dabei sollte die am Kondensator abgeführte Wärmemenge auf ein Temperaturniveau angehoben werden, das so weit über der Verdampfungstemperatur im Verdampfer bzw. am Kolonnensumpf der Entgaserkolonne liegt, dass dort aufgrund des vorherrschenden Temperaturgefälles eine effektive Wärmeübertragung mit wirtschaftlich sinnvollen Wäremetauscherflächen erfolgen kann. Der zugrunde liegende Prozess sollte aus Gründen der betrieblichen Sicherheit derart ausgelegt sein, dass keine Vermischung des Reaktorkühlmittels mit den sonst am Verfahren beteiligten oder im Umlauf befindlichen Stoffen, wie etwa dem nuklearen Zwischenkühlwasser, stattfindet. Weiterhin ist der Wärmerückgewinnungsprozess so zu gestalten, dass keine Freisetzung des radioaktiv belasteten Reaktorkühlmittels erfolgen kann. Die Entstehung explosionsfähiger Gasgemische, wie sie etwa bei der so genannten Brüdenkompression des Reaktorkühlmittels infolge von am Kompressor eindringender Luft möglich ist, sollte von vornherein unterbunden sein.

Diese zum Teil gegensätzlichen Auslegungsziele werden nach dem hier vorgestellten Konzept verwirklicht, indem die am Kondensator bei der Stripdampf-Kondensation freigesetzte Kondensationswärme auf einen wärmeflussseitig gekoppelten, jedoch strömungsmediumsseitig separierten Wärmepumpenkreislauf übertragen und dort unter Zufuhr mechanischer Leistung an der Wärmepumpe auf das zur Verdampfung des Reaktorkühlmittels benötigte Temperaturniveau gehoben wird. Durch die medienseitige Trennung von Primärkühlkreislauf und Wärmepumpenkreislauf, realisiert durch entsprechende Wärmetauscher, ist eine unzulässige Beeinflussung der chemischen Qualität des Reaktorkühlmittels vermieden. Durch die Kompressorwärmepumpe wird nur das nicht-radioaktive Kältemittel im Wärmepumpenkreislauf, nicht jedoch das Reaktorkühlmittel selber, verdichtet. Bei einer auf diesem Konzept beruhenden Anlage kann die für den Trennprozess in der Entgasungsanlage von außen zuzuführende Leistung um ca. 80% gegenüber einem mit Hilfsdampf beziehungsweise mit elektrischer Widerstandsheizung beheizten Vakuumentgaser gesenkt werden. Entsprechendes gilt für die mit dem Kühlwasser vom Kondensator in die Umgebung abzuführende Leistung. Beispielsweise kann bei einem 1400 MW-Kernkraftwerk die Wärmeleistung, die vom nuklearen Zwischenkühlkreislauf aus der Vakuumentgaseranlage an das Nebenkühlwasser übertragen werden muss, von ca. 2,3 MW auf ca. 0,4 MW abgesenkt werden. Das heißt, die Last auf das Zwischenkühlsystem wird entsprechend verringert.

In einer ersten Ausführungsform ist ein sekundärseitiger Auslass des zum Stripdampfkondensator gehörigen Wärmetauschers über eine Verbindungsleitung mit einem primärseitigen Einlass eines sekundärseitig in den Wärmepumpen kreislauf geschalteten dritten Wärmetauschers verbunden. Dabei bildet die Verbindungsleitung einen Teilabschnitt eines nuklearen Zwischenkühlkreislaufs der kerntechnischen Anlage. Die am Stripdampfkondensator anfallende Wärme wird also zuerst auf das im nuklearen Zwischenkühlkreislauf geführte Zwischenkühlwasser und von diesem über den dritten Wärmetauscher auf das im Wärmepumpenkreislauf geführte Kältemittel übertragen. Durch die Kompressionswärmepumpe im Wärmepumpenkreislauf wird das Kältemittel verdichtet, wobei sich seine Temperatur derart erhöht, dass die vom Kondensator zurückgewonnene Wärme zur Verdampfung des Reaktorkühlmittels im Kühlmittelverdampfer der Entgasungsanlage nutzbar ist. Abhängig von den installierten Wärmeübertragungsleistungen der Wärmetauscher stammt zum Beispiel 80% der Verdampferleistung aus rückgewonnener Wärme vom Kondensator und entsprechend 20% aus der Antriebsleistung des Kompressors. Da insgesamt die Wärmebilanz im System ausgeglichen sein muss, verbleibt ein entsprechender Anteil der vom Kondensator in das nukleare Zwischenkühlwasser abgegebenen Wärme dort und wird über weitere Wärmetauscher in das Nebenkühlwasser weitergeleitet.

In einer zweiten Ausführungsform ist der Wärmetauscher des Stripdampfkondensators sekundärseitig direkt in den Wärmepumpenkreislauf geschaltet, so dass die Wärme aus dem Stripdampfkondensator direkt vom Kältemittel des Wärmepumpenkreislaufs aufgenommen und anschließend in einer so genannten Kreuzstromschaltung an den Kühlmittelverdampfer der Entgasungsanlage abgegeben wird. Bei dieser Variante muss zum Ausgleich der Wärmebilanz eine Wärmeleistung, die etwa der Arbeitsleistung des Kompressors entspricht (zum Beispiel ca. 20% der Verdampferleistung), an den nuklearen Zwischenkühlkreislauf abgeführt werden. Dazu weist der Wärmepumpenkreislauf vorteilhaftervveise eine regelbare Bypassleitung zu dem Wärmetauscher des Kühlmittelverdampfers auf, in die primärseitig ein sekundärseitig in den nuklearen Zwischenkühlkreislauf geschalteter Überschusswärmetauscher eines Überschusskondensators geschaltet ist.

In beiden Ausführungsformen ist vorteilhafterweise der Wärmetauscher des Kühlmittelverdampfers sekundärseitig in eine mit beiden Enden an die Entgaserkolonne angeschlossene und von einem Teilstrom des entgasten Reaktorkühlmittels durchströmte Rezirkulations-Teilkreisleitung geschaltet. Die Umwälzung des Reaktorkühlmittels zwischen Kolonnensumpf und Kühlmittelverdampfer erfolgt dabei vorzugsweise im Naturumlauf, der durch den im Verdampfer erzeugten Dampfanteil angetrieben wird.

Zur Abkühlung der gemeinsam mit dem Stripdampf über die Gas- und Dampfaustrittsleitung am Kolonnenkopf austretenden nicht kondensierbaren Gase ist zweckmäßigerweise ein Gaskühler vorgesehen, der kühlmittelseitig parallel zum Stripdampfkondensator und diesem dampf- und gasseitig nachgeschaltet ist. Das heißt, in der ersten der beiden oben beschriebenen Varianten wird der Gaskühler durch das nukleare Zwischenkühlwasser und in der zweiten Variante durch das im Wärmepumpenkreislauf zirkulierende, nach seiner Entspannung durch ein Expansionsventil vergleichsweise kalte Kältemittel gekühlt.

Vorzugsweise ist die Entgasungsanlage als so genannte Vakuumentgasungsanlage ausgelegt. Dazu ist in die an den Kolonnenkopf angeschlossene Gas- und Dampfaustrittsleitung eine Vakuumpumpe geschaltet, deren Saugleistung für einen im Inneren der Entgaserkolonne herrschenden Betriebsdruck von weniger als 0,5 bar, vorzugsweise weniger als 0,2 bar, ausgelegt ist. Durch den verringerten Innendruck in der Entgaserkolonne wird die Siedetemperatur des Reaktorkühlmittels darin so weit abgesenkt, beispielsweise auf etwa 50°C, dass das vom Reaktorkühlsystem über das Volumenregelsystem zulaufende gashaltige Reaktorkühtmittel ohne zusätzliche Vorwärmung bereits mit seiner Siedetemperatur in den Kolonnenkopf eingeleitet werden kann.

In Bezug auf das Verfahren wird die eingangs gestellte Aufgabe durch ein Verfahren nach Anspruch 6 oder 7 gelöst.

In einer besonders bevorzugten Ausgestaltung des Verfahrens wird der Betriebsdruck im Inneren der Entgaserkolonne derart eingestellt, dass die Siedetemperatur des Reaktorkühlmittels dort im Bereich von 40°C bis 60°C, insbesondere bei etwa 50°C, liegt. Vorteilhafterweise wird dabei die Temperatur des Kältemittels im Wärmepumpenkreislauf vor dem Eintritt in den Wärmetauscher des Kühlmittelverdampfers durch eine Kompressionspumpe auf 60° bis 80°C, insbesondere auf etwa 70°C, angehoben, was unter den genannten Druckverhältnissen für eine Verdampfung des Reaktorkühlmittels ausreicht.

Als Kältemittel im Wärmepumpenkreislauf wird bevorzugt ein fluorierter Kohlenwasserstoff, insbesondere das auch unter der Bezeichnung R134a bekannte 1,1,1,2-Tetrafluorethan verwendet, welches an die oben angegebenen Temperaturverhältnisse besonders gut angepasst ist und sich überdies durch chemische Stabilität, Chlorfreiheit, geringe Toxizität und Unbrennbarkeit auszeichnet. Als Wärmepumpen sind übliche Kompressorwärmepumpenaggregate geeignet, wie sie zum Beispiel in den hier in Frage kommenden Kernkraftwerken mit Druckwasserreaktoren auch zur Erzeugung von Kaltwasser in den Kaltwassersystemen, insbesondere auch mit den nunmehr im Wärmepumpenkreislauf benötigten Leistungsgrößen, eingesetzt werden.

Neben den bereits genannten Vorteilen bieten die nunmehr vorgesehene Vorrichtung und das zugehörige Verfahren zur Kühlmittelentgasung mit Wärmerückgewinnung insbesondere folgende Vorteile gegenüber den bislang bekannten Entgasungssystemen mit Hilfsdampfheizung beziehungsweise mit elektrischer Beheizung:
- Die erforderliche Zufuhr und Abfuhr von Wärmeleistung in das Bilanzgebiet des Entgasungssystems wird bei einem 1400 MW-Kernkraftwerk von etwa 2,3 MW auf etwa 0,4 MW reduziert.
- Die großvolumigen Leitungen und Armaturen für Hilfsdampf und Hilfsdampfkondensat entfallen, ebenso die Hilfsdampfkondensatkühler sowie entsprechende, Behälter und Pumpen.
- Die aufwändige Zuleitung von elektrischer Leistung zur Wämeerzeugung unter Einsatz eines vor Ort aufgestellten Transformators entfällt.
- Die Zuleitung der erforderlichen elektrischen Leistung für den Kompressor (im Beispiel etwa 400 kW) kann problemlos auf mittlerer Spannungsebene erfolgen.
- Das nukleare Zwischenkühlsystem hat nur noch eine vergleichsweise kleine, der Kompressorleistung entsprechende Leistung (im Beispiel etwa 400 kW) abzuführen.
- Der elektrische Eigenbedarf der Kernkraftwerksanlage wird damit erheblich reduziert.
- Die Kühlwasserleitungen und Armaturen können mit erheblich kleinerer Nennweite ausgeführt werden, insbesondere bei der zweiten Variante mit direkter

Wärmeübertragung vom Stripdampfkondensator auf den Wärmepumpen kreislauf.
- Die Engpassleistung für den betreffenden Strang des nuklearen Zwischenkühlsystems beim Abfahren der Anlage wird entsprechend reduziert.
- Die Wärmeverluste aus der Entgaseranlage in die Raumluft werden wesentlich reduziert, da keine Anlagenteile mit hohen Temperaturen mehr am Prozess beteiligt sind. Die Abwärme des Kompressormotors wird unmittelbar vom Kältemittel im Wärmepumpenkreislauf abgeführt und zurückgewonnen.
- Die von der nuklearen Lüftungsanlage mit Hilfe von Kältemaschinen aufwändig abzuführende Wärme wird entsprechend reduziert.
- Die für den Wärmepumpenkreislauf einzusetzenden Komponenten sind zum großen Teil aus den Kaltwassersystemen der Kernkraftwerke bekannt und können im Gegensatz zur elektrischen Widerstandsheizung als betriebsbewährt angesehen werden.

Insbesondere trägt das nunmehr vorgesehene Konzept dazu bei, dass eine kerntechnische Anlage mit einem Druckwasserreaktor auch an Standorten mit ungünstigen Kühlwasserverhältnissen, das heißt vergleichsweise hohen Kühlwassertemperaturen, mit einer ausgewogenen Auslegung der zur Kühlmittelentgasung vorgesehenen Hilfssysteme konzipiert werden kann.

Verschiedene Ausführungsbeispiele der Erfindung werden anhand einer Zeichnung näher erläutert. Darin zeigen:
- Fig. 1: einen vereinfachten Schaltplan einer Entgasungsanlage mit Wärmerückgewinnung gemäß einer ersten Ausführungsvariante, und
- Fig. 2: einen vereinfachten Schaltplan einer Entgasungsanlage mit Wärmerückgewinnung gemäß einer zweiten Ausführungsvariante.

Gleiche Teile sind in beiden Figuren mit denselben Bezugszeichen versehen.

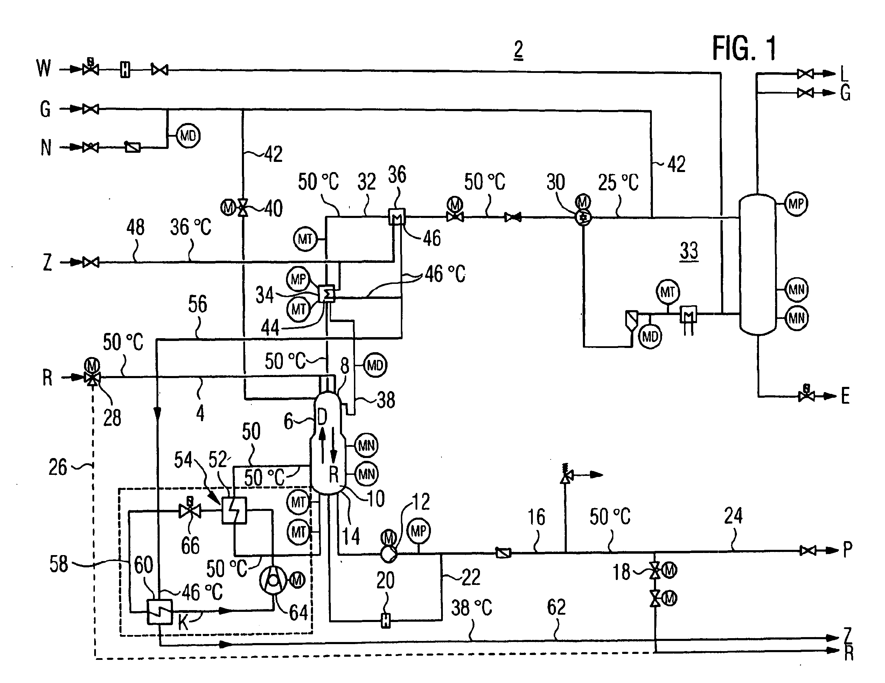

Die in Fig. 1 in einem vereinfachten Schaltplan mitsamt einer Anzahl von Peripheriekomponenten dargestellte Entgasungsanlage 2 für Reaktorkühlmittel R umfasst eine über eine Kühlmitteleinlassleitung 4 mit gashaltigem Reaktorkühlmittel R aus dem Primärkreislauf eines Druckwasserreaktors gespeiste Entgaserkolonne 6. Das gashaltige Reaktorkühlmittel R tritt im Betrieb der Anlage 2 über die am Kolonnenkopf 8 angeschlossene Kühlmitteleinlassleitung 4 mit einer Einlasstemperatur von etwa 50°C in die Entgaserkolonne 6 ein, was bei einem in der Entgaserkolonne 6 herrschenden Betriebsdruck von etwa 0,125 bar annähernd der Siedetemperatur entspricht, rieselt anschließend über eine Mehrzahl von hier nicht näher dargestellten Glockenböden nach unten und sammelt sich schließlich im Kolonnensumpf 10 der Entgaserkolonne 6. Während des Herunterrieselns tritt das Reaktorkühlmittel R in intensiven Kontakt mit knapp oberhalb des Kolonnensumpfes 10 in die Entgaserkolonne 6 eingeleitetem und diese im Gegenstrom zum Kühlmittelstrom durchströmenden Stripdampf D. Dabei werden im Reaktorkühlmittel R gelöste, nicht kondensierbare Gase, wie zum Beispiel Wasserstoff, Sauerstoff, Stickstoff oder verschiedene Edelgase, vom Stripdampf D mitgerissen und nach oben zum Kolonnenkopf 8 hin abtransportiert, wobei ein Dekontfaktor von >100 erzielt wird.

Der größte Teil des sich im Kolonnensumpf 10 sammelnden entgasten Reaktorkühlmittels R wird mit Hilfe einer regelbaren Entgaserabziehpumpe 12 über eine im Bereich des Kolonnenbodens 14 an die Entgaserkolonne 6 angeschlossene Kühlmittelaustrittsleitung 16 kontinuierlich abgezogen und über regelbare Auslassventile 18 wieder dem Reaktorkühlsystem zugeführt. Parallel zur Entgaserabziehpumpe 12 ist ein Drosselventil 20 in eine Pumpenbypassleitung 22 geschaltet, so dass auch bei abgeschalteter oder ausgefallener Entgaserabziehpumpe 12 eine gewisse Mindestmenge von Reaktorkühlmittel R pro Zeiteinheit aus der Entgaserkolonne 6 abströmen kann. Über eine von der Kühlmittelaustrittsleitung 16 abzweigende Entnahmeleitung 24 können bei Bedarf Proben des entgasten Reaktorkühlmittels R entnommen werden. Ferner ist eine Entgaserbypassleitung 26 vorgesehen, so dass das Reaktorkühlmittel R je nach Bedarf und Anwendungsfall beziehungsweise je nach Betriebszustand entsprechend der Stellung des regelbaren Verteilerventils 28 komplett oder teilweise um die Entgaserkolonne 6 herumgeleitet werden kann, diese dann also ohne Entgasung umgeht.

Der in der Entgaserkolonne 6 aufsteigende Stripdampf D, der auch Anteile an den aus dem Reaktorkühlmittel R herausgelösten nicht kondensierbaren Gasen enthält, wird mit Hilfe einer Entgaservakuumpumpe 30 über eine an den Kolonnenkopf 8 angeschlossene Gas- und Dampfaustrittsleitung 32 abgesaugt. Die Saugleistung der Entgaservakuumpumpe 30 ist dabei derart bemessen, dass im Betrieb der Anlage 2 ein reduzierter Innendruck in der Entgaserkolonne 6 von rund 0,125 bar dauerhaft aufrecht erhalten werden kann. Die im Ausführungsbeispiel als Wasserringkompressor ausgebildete Entgaservakuumpe 30 ist Bestandteil einer über eine Abgasleitung G an ein hier nicht mehr dargestelltes Abgassystem angeschlossenen Entgaservakuumpenanlage 33, die eine Anzahl von weiteren, als Hilfsaggregate für den Ringkolbenkompressor wirksamen Komponenten (Ringflüssigkeitsbehälter, Ringflüssigkeitskühler, Ringflüssigkeitssieb) aufweist, deren Funktionsweise hier jedoch nicht im einzelnen von Interesse ist.

An den Kolonnenkopf 8 der Entgaserkolonne 6 ist weiterhin eine mit einem Regelventil 40 versehene Gaszufuhrleitung 42 angeschlossen, die mit ihrem anderen Ende druckseitig der Entgaservakuumpumpe 30 in die Gas- und Dampfaustrittsleitung 32 mündet. Die Gaszufuhrleitung 42 dient der Druckregelung für den Prozess in der Entgaserkolonne 6; über sie wird mit Hilfe des Regelventils 40 genau so viel Gas aus dem Abgassystem des Kraftwerks in den Kolonnenkopf 8 eingeleitet, dass sich dort entsprechend der Kennlinie der Entgaservakuumpumpe 30 der gewünschte Betriebsdruck von vorzugsweise 0,125 bar absolut einstellt. Dieses eingeleitete Gas dient dann auch gleichzeitig als Spül-/Trägergas und als "Verdünnung" für dasjenige Gas, insbesondere Wasserstoff, das in der Kolonne 6 aus dem Reaktorkkühlmittel R entfernt wurde.

Saugseitig der Entgaservakuumpumpe 30 sind in die Gas- und Dampfaustrittsleitung 32 ein Stripdampfkondensator 34 zur Kondensation des Stripdampfes D und ein nachgeordneter Gaskühler 36 zur Kühlung der nach der Stripdampf-Kondensation noch in der Gas- und Dampfaustrittsleitung 32 verbleibenden Gasanteile geschaltet. Das im Stripdampfkondensator 34 anfallende Kondensat wird über eine Kondensatleitung 38 erneut dem Kolonnenkopf 8 der Entgaserkolonne 6 zugeführt, um dort gemeinsam mit dem über die Kühlmitteleintrittsleitung 16 zugespeisten Reaktorkühlmittel R nach unten zu rieseln und dabei entgast zu werden.

Nach dem Passieren des Gaskühlers 36 weist das aus der Entgaserkolonne 6 abströmende nicht kondensierbare Gas eine unterhalb der Siedetemperatur des Reaktorkühlmittels R liegendeTemperatur von etwas weniger als 50°C auf, so dass der Feuchtigkeitsgehalt des auf die Entgaservakuumpumpe 30 zuströmenden Gases und der Austrag von Wasserdampf wirkungsvoll begrenzt werden. Beim Passieren der Entgasungsvakuumpumpe 30 fällt die Gastemperatur noch weiter, auf etwa 25°C, ab. Gegebenenfalls erfolgt im Gaskühler 36 auch noch ein zweiter Kondensationsschritt, bei dem der verbliebene Restanteil des Dampfes D mit einer geringfügigen Unterkühlung kondensiert wird und anschließend als flüssiges Kondensat in den Kolonnenkopf 8 der Entgaserkolonne 6 zurückgeleitet wird, z.B. per Schwerkraft im Gegenstrom zum Dampf-/Gasgemisch durch die Leitung 32 und durch den Stripdampfkondensator 34, oder über eine (hier nicht dargestellte) separate Kondensatableitung aus dem Gaskühler 36.

Kühlmittelseitig sind der Wärmetauscher 44 des Stripdampfkondensators 34 und der Wärmetauscher 46 des Gaskühlers 36 parallel geschaltet. Beide werden über eine Kühlmittelleitung 48 mit so genanntem Zwischenkühlwasser Z aus dem nuklearen Zwischenkühlsystem der Reaktoranlage versorgt, wobei die Eintrittstemperatur des Zwischenkühlwassers Z im Ausführungsbeispiel bei etwa 36°C liegt. Durch die vom Stripdampf D beziehungsweise von den nicht kondensierbaren Gasen übertragene Wärme steigt die Temperatur des Zwischenkühlwassers Z an der Austrittsseite des jeweiligen Wärmetauschers 44, 46 auf etwa 46°C an.

Am Boden 14 der Entgaserkolonne 6 ist ein erstes Ende einer Rezirkulationsleitung 50 angeschlossen, durch die eine Teilmenge des sich im Kolonnensumpf 10 sammelnden, entgasten Reaktorkühlmittels R strömt. Der abgezweigte Teilstrom tritt durch den beheizten Wärmetauscher 52 eines Kühlmittelverdampfers 54 und wird dabei verdampft. Der so erzeugte Kühlmitteldampf wird knapp oberhalb der Füllstandshöhe des flüssigen Reaktorkühlmittels R über das zweite Ende der Rezirkulationsleitung 50 erneut in die Entgaserkolonne 6 geleitet, in der er als Stripdampf D wirksam ist.

Die Entgasungsanlage 2 ist spezifisch für einen besonders energieeffizienten Betrieb bei zugleich gering gehaltener Belastung des nuklearen Zwischenkühlsystems ausgelegt. Dazu ist eine Rückgewinnung der am Stripdampfkondensator 34 freigesetzten Kondensationswärme und ihre Wiedernutzbarmachung zur Kühlmittelverdampfung, das heißt zur Stripdampferzeugung, vorgesehen. Das den Stripdampfkondensator 34 und den Gaskühler 36 verlassende, dort auf etwa 46°C erwärmte Zwischenkühlwasser Z wird dazu über die Verbindungsleitung 56 einem sekundärseitig in einen Wärmepumpenkreislauf 58 geschalteten Wärmetauscher 60 zugeführt und gibt dort den größten Teil der zuvor im Stripdampfkondensator 34 und im Gaskühler 36 aufgenommenen Wärmemenge an ein im Wärmepum penkreislauf 58 geführtes Kältemittel K, beispielsweise das Kältemittel R134a, ab, welches dadurch verdampft wird. Das aus dem Wärmetauscher 60 abströmende Zwischenkühlwasser Z wird anschließend mit einer Temperatur von nunmehr nur noch etwa 38°C über eine Leitung 62 zum nuklearen Zwischenkühlsystem zurückgeführt. Das im Wärmetauscher 60 verdampfte Kältemittel K hingegen wird durch den Wärmepumpenkompressor 64 verdichtet und zum Wärmetauscher 52 des Kühlmittelverdampfers 54 gefördert. Durch die Verdichtung steigt die Temperatur des Kältemittels K auf rund 70°C an, was ausreicht, um im Wärmeta uscher 52 die Verdampfung des in der Rezirkulationsleitung 50 geführten, anfänglich noch flüssigen Reaktorkühlmittels R herbeizuführen, da dessen Siedetemperatur - bedingt durch den herabgesetzten Innendruck in der Entgaserkolonne 6 und in der mit ihr verbundenen Rezirkulationsleitung 50 - nur bei etwa 50°C liegt. Dies ist, wie oben bereits dargestellt wurde, auch in etwa die Temperatur, mit der das Reaktorkühlmittel R in die Rezirkulationsleitung 50 einströmt. Das Kältemittel K wird im Wärmetauscher 52 durch Kondensation verflüssigt. Das heißt, der Wärmetauscher 52 ist in Bezug auf das Kältemittel K auf seiner Primärseite ein Kondensator und in Bezug auf das Reaktorkühlmittel R auf seiner Sekundärseite ein Verdampfer (Kühlmittelverdampfer). Das nach seiner Wärmeabgabe im Wärmetauscher 52 des Kühlmittelverdampfers 54 flüssige Kältemittel K wird beim Durchströmen des Expansionsventils 66 expandiert und weiter abgekühlt, so dass der oben beschriebene Kreislauf danach von neuem beginnen kann.

Zur Inbetriebnahme der Vakuumentgaseranlage 2 wird zunächst der Kühlwasserdurchsatz durch den Stripdampfkondensator 34 und den Gaskühler 36 hergestellt, indem die entsprechenden Armaturen geöffnet werden. Gleichzeitig wird damit über die Verbindungsleitung 56 auch der Wärmetauscher 60 im Wärmepumpe nkreislauf 58 mit nuklearem Zwischenkühlwasser Z durchströmt, wodurch die Wärmequelle im Wärmepumpenkreislauf 58 verfügbar ist. Im nächsten Schritt werden die Entgaservakuumpumpe 30, die typischerweise als Wasserringkompressor ausgeführt ist, sowie die erforderlichen Ver- und Entsorgungssysteme (Ringflüssigkeitszu- und - ablauf, Kaltwasserversorgung, Spülgasdurchsatz vom Abgassystem) eingeschaltet. Im eingeschalteten Zustand hält die Entgaservakuumpumpe 30 gemeinsam mit dem zugehörigen Regelkreis, der auf das Regelventil 40 in der Gaszufuhrleitung 42 zum Kolonnenkopf 8 wirkt, automatisch den erforderlichen Druck von zum Beispiel 0,125 bar in der Entgaserkolonne 6 aufrecht. Auch die internen Zustände innerhalb der Vakuumpumpenanlage, wie zum Beispiel der Füllstand im Ringflüssigkeitsbehälter, werden automatisch auf dem erforderlichen Wert gehalten.

Als nächstes wird die Füllstandsregelung für den Kolonnensumpf 10 und den Kühlmittelverdampfer 54 der Vakuumentgaseranlage 2 in Betrieb genommen. Diese Regelung schaltet die Entgaserabziehpumpe 12 ein, öffnet das Absperrventil 18 im Ablauf aus der Entgaseranlage 2 und stellt das ebenfalls dort befindliche Regelventil mit Hilfe eines Reglers so ein, dass das Rohrbündel im Kühlmittelverdampfer 54 der Entgaseranlage 2 immer geflutet ist. Durch das Öffnen des Zulaufventils vom Volumenregelsystem wird nun gashaltiges Reaktorkühlmittel R in den Kolonnenkopf 8 der Entgaserkolonne 6 eingeleitet, und gleichzeitig wird der Kompressor 64 der Wärmepumpenanlage eingeschaltet. Durch die Komprimierung des Kältemitteldampfes mit dem Kompressor 64 des Wärmepumpenkreislaufs 58 auf einen Druck von zum Beispiel 25 bar, wird seine Temperatur so weit erhöht, dass im Kühlmittelverdampfer 54 ein großer Teil seiner Wärme an das auf der anderen Seite des Wärmetauschers 52 vorhandene Reaktorkühlmittel R angegeben wird, wodurch dieses verdampft und als Stripdampf D in der Entgaserkolonne 6 verwendet werden kann. Die Umwälzung des Reaktorkühlmittels R zwischen dem Kolonnensumpf 10 und dem Kühlmittelverdampfer 54 erfolgt vorzugsweise im Naturumlauf, der durch den im Kühlmittelverdampfer 54 erzeugten Dampfanteil angetrieben wird.

Auf der Wärmepumpenseite des Kühlmittelverdampfers 54 kondensiert das noch unter hohem Druck stehende Kältemittel K. Es strömt dann zum Expansionsventil 66, wo es auf einen vergleichsweise niedrigen Druck entspannt wird und sich dabei so weit abkühlt, dass es im Wärmetauscher 60 des Wärmepumpenkrei slaufs 58 Wärme aus dem auf der anderen Seite strömenden nuklearen Zwischenkühlwasser Z aufnehmen kann. Bei dieser Wärmeaufnahme verdampft das Kältemittel K und kann dann vom Kompressor 64 erneut angesaugt werden. Der Kältemittelkreislauf der Wärmepumpenanlage ist ein hermetisch geschlossener Kreislauf, dem während des Betriebs Kältemittel K weder entzogen noch hinzugefügt werden muss. Die Leistungsregelung der Wärmepumpenanlage erfolgt einerseits über eine entsprechende Drosseleinrichtung im Saugstutzen des Kompressors 64 und andererseits über eine vom Kältemittelfüllstand im Kühlmittelverdampfer 54 abhängige Steuerung des Expansionsventils 66.

Im Kühlmittelverdampfer 54 der Entgasungsanlage 2 wird durch die beschriebene Wärmezufuhr über den Wärmetauscher 60 des Wärmepumpenkreislaufs 58 das im Siedezustand befindliche Reaktorkühlmittel R mit einer Rate verdampft, die etwa 5% des am Kolonnenkopf 8 zulaufenden Massenstroms an gashaltigem Reaktorkühlmittel R entspricht. Der Stripdampf D steigt in der Entgaserkolonne 6 von unten nach oben auf und tritt bei der Passage durch die Glocken auf den einzelnen übereinander angeordneten Böden in intensiven Kontakt mit dem herabrieselnden flüssigen Reaktorkühlmittel R, wodurch diesem - wie bereits oben dargestellt - das Gas entzogen wird. Vom Kolonnenkopf 8 tritt der Dampf D, gemischt mit den aus dem Reaktorkühlmittel R ausgetriebenen nicht kondensierbaren Gasen, in den Stripdampfkondensator 34 der Entgasungsanlage 2 über. Dort wird die im Dampf D enthaltene Verdampfungswärme an das nukleare Zwischenkühlwasser Z übertragen, wodurch der Dampf D zum größten Teil kondensiert. Das Kondensat wird durch Gravitation über die Kondensatleitung 38 in den Kolonnenkopf 8 zurückgeleitet, während der kleinere, nicht kondensierte Teil des Dampfes und der Strom des nicht kondensierbaren Gases in den nachgeschalteten Gaskühler 36 weitergeleitet wird. Dort erfolgt ebenfalls unter Abgabe von Wärme an das nukleare Zwischenkühlwasser Z ein weiterer Kondensationsschritt, bei dem der verbliebene Restanteil des Dampfes D mit einer geringfügigen Unterkühlung kondensiert wird und anschließend im Gegenstrom zum Dampf-/Gasgemisch per Gravitation zurück in den Stripdampfkondensator 34 und von dort in den Kolonnenkopf 8 der Entgaserkolonne 6 zurückgeleitet wird. Das nicht kondensierbare Gas wird mit einer der Prozesstemperatur entsprechenden Restfeuchte von der Entgaservakuumpumpe 30 angesaugt, verdichtet und in das (nicht dargestellte) Abgassystem der Kraftwerksanlage abgeleitet.

Entsprechend dem Zustrom von gashaltigem Reaktorkühlmittel R am Kolonnenkopf 8 läuft dem Kolonnensumpf 10 entgastes Kühlmittel R zu. Das entgaste Kühlmittel R wird mit der Entgaserabziehpumpe 30 vom unter Unterdruck stehenden Kolonnensumpf 10 in den Sammler des Volumenregelsystems gefördert, dem durch den Volumenausgleichsbehälter (hier nicht dargestellt) ein Druck von zum Beispiel 3 bis 4 bar aufgeprägt wird. Die weitere Förderung in den Reaktorkühlkreislauf erfolgt mit den Hochdruckförderpumpen des Volumenregelsystems.

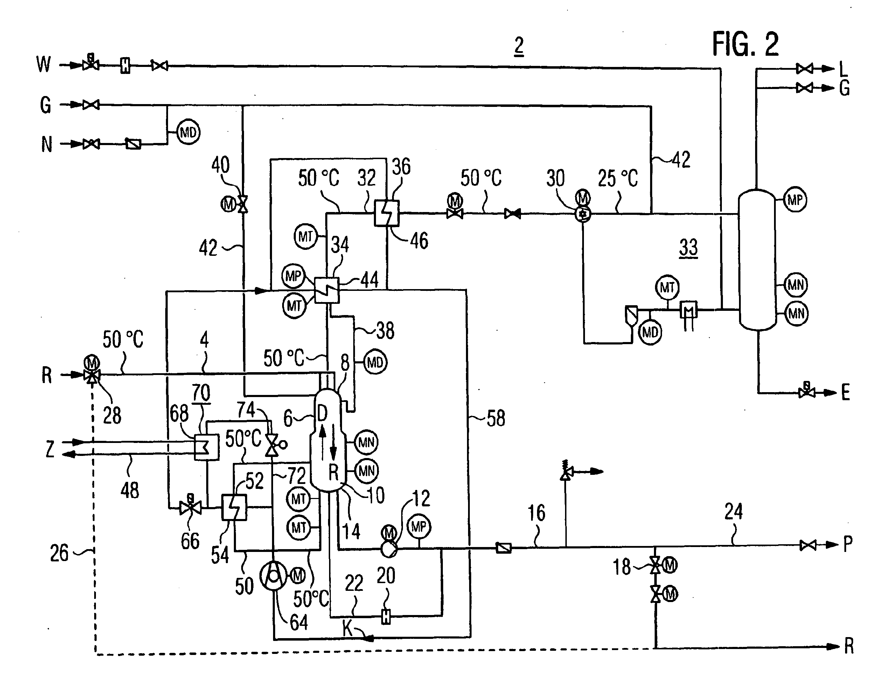

Die in Fig. 2 dargestellte Entgasungsanlage 2 unterscheidet sich von derjenigen in Fig. 1 dadurch, dass der Wärmetauscher 44 des Stripdampfkondensators 34 und der Wärmetauscher 46 des Gaskühlers 36 sekundärseitig direkt in den den Kühlmittelverdampfer 54 umfassenden Wärmepumpenkreislauf 58 geschaltet sind. Die aus Fig. 1 bekannte Verbindungsleitung 56 und der Wärmetauscher 60 entfallen bei dieser Variante. Bei dieser Variante wird also die Wärme vom Stripdampfkondensator 34 der Entgasungsanlage 2 direkt durch Verdampfung des Kältemittels K im angeschlossenen Wärmepumpenkreislauf 58 abgeführt. Dadurch kann die Versorgung der Entgasungsanlage 2 mit nuklearem Zwischenkühlwasser Z wesentlich kleiner als bei der in Fig. 1 dargestellten ersten Variante ausgeführt werden, da das nukleare Zwischenkühlwasser Z nicht für den Wärmetransport vom Stripdampfkondensator 34 in die Wärmepumpenanlage benötigt wird, sondern nur noch für die Abfuhr der verhältnismäßig kleinen Wärmeleistung, die der von der Kompressorwärmepumpe 64 in den Kreislauf 58 eingebrachten Verdichtungsleistung entspricht. Zu diesem Zweck ist der durch das Zwischenkühlwasser Z gekühlte Überschusswärmetauscher 68 des Überschusskondensators 70 kältemittelseitig in eine parallel zum Kühlmittelverdampfer 54 durchströmte, zwischen der Kompressorwärmepumpe 64 und dem Expansionsventil 66 angeordnete Verdampferbypassleitung 72 geschaltet. Der Massenstrom durch die Verdampferbypassleitung 72 ist über ein Regelventil 74 regelbar.

Die Abläufe für die Durchschaltung des nuklearen Zwischenkühlwassers Z, die Inbetriebnahme der Vakuumpumpe 30, der Füllstandsregelung im Kolonnensumpf 10 und für den Zulauf des gashaltigen Reaktorkühlmittels R entsprechen denen bei der in Fig. 1 dargestellten und bereits weiter oben erläuterten ersten Variante. Beim Einschalten der Wärmepumpe 64 muss die Leistung vergleichsweise langsam gesteigert werden und darauf geachtet werden, dass am Stripdampfkondensator 34 der Vakuumentgaseranlage 2 nicht zu schnell Wärme entzogen wird und eine unerwünschte, zu starke Unterkühlung stattfindet. Sobald die Wärmepumpenanlage ihre Nennleistung erreicht hat, wird der stationäre Leistungsbetrieb allein mit Hilfe der Regelkreise aufrecht erhalten.

Bei dem in Fig. 2 dargestellten Ausführungsbeispiel ergeben sich besonders günstige Verhältnisse in den beteiligten Wärmetauschern 44, 52 dadurch, dass jeweils auf beiden Seiten das jeweilige Medium entweder verdampft oder kondensiert. Im Kühlmittelverdampfer 54 der Entgasungsanlage 2 kondensiert auf der Wärmepumpenseite das Kältemittel K, und auf der Vakuumentgaserseite siedet das Reaktorkühlmittel R. Im Wärmetauscher 44 des Stripdampfkondensators 34 siedet auf der Wärmepumpenseite das Kältemittel K, und auf der Vakuumentgaserseite kondensiert das Reaktorkühlmittel R. Diese Verhältnisse führen dazu, dass jeweils über die gesamte Wärmetauscherfläche eine konstante Temperaturdifferenz herrscht, die daher verhältnismäßig hoch gewählt werden kann, ohne dass sich übermäßige Exergieverluste einstellen. Dies erlaubt, die erforderlichen Wärmeaustauschflächen klein zu halten.

Günstig ist bei der in Fig. 2 dargestellten Variante weiterhin die Tatsache, dass zwischen der Wärmequellenseite und der Wärmesenke im Wärmepumpenkreis lauf 58 nur eine vergleichsweise geringe Temperaturdifferenz besteht. Die Temperaturdifferenz des Kältemittels K zwischen der Verflüssigung und der Verdampfung kann also klein gehalten werden, da sie allein die für die Wärmeübertragung durch die Wärmetauscherflächen erforderliche Temperaturdifferenz abdecken muss. Für den Verdichter der Wärmepumpe 64 bedeutet dies ein niedriges Druckverhältnis und führt beim Wärmepumpenkreislauf 58 insgesamt zu einer hohen Leistungszahl ε, die das Verhältnis zwischen Heizleistung und zugeführter Antriebsleistung kennzeichnet. In der Vakuumentgaseranlage 2 siedet das Reaktorkühlmittel bei 50°C; es reicht also aus, wenn der Kältemitteldampf mit einer Temperatur von zum Beispiel 65°C bis 70°C in den Kühlmittelverdampfer 54 strömt. Bei derartigen Prozessparametern kann problemlos das bereits genannte Kältemittel R134a eingesetzt werden, das für den Einsatz im Kontrollbereich eines Kernkraftwerks aus sicherheitstechnischer Sicht besondere Vorteile, wie zum Beispiel chemische Stabilität, Chlorfreiheit, geringe Toxizität und Unbrennbarkeit, besitzt.

Das Verfahren nach den beiden in Fig. 1 und Fig. 2 dargestellten Varianten ist besonders dann effizient, wenn der Entgasungsprozess unter den oben bereits dargestellten Unterdruckbedingungen bei einer Siedetemperatur von etwa 50°C abläuft, da dann keine Leistung zum Vorwärmen des zulaufenden Reaktorkühlmittels R benötigt wird und die insgesamt umgesetzte Wärmeleistung für den Entgasungsprozess am geringsten ist. Dementsprechend ist auch der apparative Aufwand unter diesen Bedingungen am geringsten.

### Bezugszeichenliste

- 2: Entgasungsanlage
- 4: Kühlmitteleinlassleitung
- 6: Entgaserkolonne
- 8: Kolonnenkopf
- 10: Kolonnensumpf
- 12: Entgaserabziehpumpe
- 14: Kolonnenboden
- 16: Kühlmittelaustrittsleitung
- 18: Auslassventil
- 20: Drosselventil
- 22: Pumpenbypassleitung
- 24: Entnahmeleitung
- 26: Entgaserbypassleitung
- 28: Verteilerventil
- 30: Entgaservakuumpumpe
- 32: Gas- und Dampfaustrittsleitung
- 33: Entgaservakuumpumpenanlage
- 34: Stripdampfkondensator
- 36: Gaskühler
- 38: Kondensatleitung
- 40: Regelventil
- 42: Gaszufuhrleitung
- 44: Wärmetauscher (Stripdampfkondensator)
- 46: Wärmetauscher (Gaskühler)
- 48: Kühlmittelleitung
- 50: Rezirkulations-Teilkreisleitung
- 52: Wärmetauscher (Kühlmittelverdampfer)
- 54: Kühlmittelverdampfer
- 56: Verbindungsleitung
- 58: Wärmepumpenkreislauf
- 60: Wärmetauscher (Wärmepumpenkreislauf)
- 62: Leitung
- 64: Kompressorwärmepumpe
- 66: Expansionsventil
- 68: Überschusswärmetauscher
- 70: Überschusskondensator
- 72: Verdampferbypassleitung
- 74: Regelventil

- D: Stripdampf
- E: Entwässerung
- G: Abgas
- K: Kältemittel
- L: Lüftung
- N: Stickstoffversorgung
- P: Probenahme
- R: Reaktorkühlmittel
- W: Deionat
- Z: Zwischenkühlwasser

## Patentansprüche

1. Kerntechnische Anlage mit einem Druckwasserreaktor und mit einer Entgasungsanlage (2) für Reaktorkühlmittel (R), die eine vom Reaktorkühlmittel (R) durchströmbare Entgaserkolonne (6), einen Kühlmittelverdampfer (54) mit einem ersten Wärmetauscher (52) und einen Stripdampfkondensator (34) mit einem zweiten Wärmetauscher (44) umfasst, wobei der Wärmetauscher (52) des Kühlmittelverdampfers (54) sekundärseitig von einem Teilstrom des Reaktorkühlmittels (R) durchströmt ist, und wobei der Wärmetauscher (44) des Stripdampfkondensators (34) primärseitig in eine an die Entgaserkolonne (6) angeschlossene Dampf- und Gasaustrittsleitung (32) geschaltet ist,
**dadurch gekennzeichnet, dass**
der Wärmetauscher (52) des Kühlmittelverdampfers (54) primärseitig in einen Wärmepumpenkreislauf (58) geschaltet ist, der in Bezug auf den sich im Anlagenbetrieb einstellenden Wärmefluss derart an den Wärmetauscher (44) des Stripdampfkondensators (34) gekoppelt ist, dass die bei der Stripdampf-Kondensation freigesetzte Wärme zumindest zum Teil auf das den Kühlmittelverdampfer (54) durchströmende Reaktorkühlmittel (R) übertragen wird und dabei zu seiner Verdampfung führt, wobei der Wärmetauscher (44) des Stripdampfkondensators (34) sekundärseitig direkt in den Wärmepumpen kreislauf (58) geschaltet ist, und wobei der Wärmepumpenkreislauf (58) eine regelbare Bypassleitung (72) zu dem Wärmetauscher (52) des Kühlmittelverdampfers (54) aufweist, in die primärseitig ein sekundärseitig in einen nuklearen Zwischenkühlkreislauf geschalteter Überschusswärmetauscher (68) eines Überschusskondensators (70) geschaltet ist.

2. Kerntechnische Anlage mit einem Druckwasserreaktor und mit einer Entgasungsanlage (2) für Reaktorkühlmittel (R), die eine vom Reaktorkühlmittel (R) durchströmbare Entgaserkolonne (6), einen Kühlmittelverdampfer (54) mit einem ersten Wärmetauscher (52) und einen Stripdampfkondensator (34) mit einem zweiten Wärmetauscher (44) umfasst, wobei der Wärmetauscher (52) des Kühlmittelverdampfers (54) sekundärseitig von einem Teilstrom des Reaktorkühlmittels (R) durchströmt ist, und wobei der Wärmetauscher (44) des Stripdampfkondensators (34) primärseitig in eine an die Entgaserkolonne (6) angeschlossene Dampf- und Gasaustrittsleitung (32) geschaltet ist,
**dadurch gekennzeichnet, dass**
der Wärmetauscher (52) des Kühlmittelverdampfers (54) primärseitig in einen Wärmepumpenkreislauf (58) geschaltet ist, der in Bezug auf den sich im Anlagenbetrieb einstellenden Wärmefluss derart an den Wärmetauscher (44) des Stripdampfkondensators (34) gekoppelt ist, dass die bei der Stripdampf-Kondensation freigesetzte Wärme zumindest zum Teil auf das den Kühlmittelverdampfer (54) durchströmende Reaktorkühlmittel (R) übertragen wird und dabei zu seiner Verdampfung führt, wobei
ein sekundärseitiger Auslass des zum Stripdampfkondensator (34) gehörigen Wärmetauschers (44) über eine Verbindungsleitung (56) mit einem primärseitigen Einlass eines sekundärseitig in den Wärmepumpenkreislauf (58) geschalteten dritten Wärmetauschers (60) verbunden ist und die Verbindungsleitung (56) einen Teilabschnitt eines nuklearen Zwischenkühlkreislaufs der kerntechnischen Anlage bildet.

3. Kerntechnische Anlage nach einem der Ansprüche 1 bis 2,
**dadurch gekennzeichnet, dass**
der Wärmetauscher (52) des Kühlmittelverdampfers (54) sekundärseitig in eine mit beiden Enden an die Entgaserkolonne (6) angeschlossene und von einem Teilstrom des entgasten Reaktorkühlmittels (R) durchströmte Rezirkulationsleitung (50) geschaltet ist.

4. Kerntechnische Anlage nach einem der Ansprüche 1 bis 3,
**gekennzeichnet durch**
einen kühlmittelseitig zum Stripdampfkondensator (34) parallel geschalteten und diesem dampf- und gasseitig nachgeschalteten Gaskühler (36).

5. Kerntechnische Anlage nach einem der Ansprüche 1 bis 4,
**gekennzeichnet durch**
eine in die Gas- und Dampfaustrittsleitung (32) geschaltete Vakuumpumpe (30), deren Saugleistung für einen im Inneren der Entgaserkolonne (6) herrschenden Betriebsdruck von weniger als 0,5 bar, vorzugsweise weniger als 0,2 bar, ausgelegt ist.

6. Verfahren zum Betreiben einer kerntechnischen Anlage mit einem Druckwasserreaktor und mit einer einen Kühlmittelverdampfer (54) und einen Stripdampfkondensator (34) aufweisenden Entgasungsanlage (2) für Reaktorkühlmittel (R), **dadurch gekennzeichnet, dass** die bei der Kondensation von Stripdampf (D) im Stripdampfkondensator (34) frei werdende Kondensationswärme in einen Wärmepumpenkreislauf (58) eingebracht und anschließend zumindest zum Teil auf einen den Kühlmittelverdampfer (54) durchströmenden Teilstrom des Reaktorkühlmittels (R) übertragen wird, wobei dieses verdampft wird, wobei die im Stripdampfkondensator (34) frei werdende Kondensationswärme direkt auf ein im Wärmepumpenkreislauf (58) geführtes Kältemittel (K) übertragen wird und wobei der Wärmepumpenkreislauf (58) eine regelbare Bypassleitung (72) zu dem Wärmetauscher (52) des Kühlmittelverdampfers (54) aufweist, in die primärseitig ein sekundärseitig in einen nuklearen Zwischenkühlkreislauf geschalteter Überschusswärmetauscher (68) eines Überschusskondensators (70) geschaltet ist, so dass Überschusswärme über den Überschusswärmetauscher (68) an den nuklearen Zwischenkühlkreislauf abgegeben wird.

7. Verfahren zum Betreiben einer kerntechnischen Anlage mit einem Druckwasserreaktor und mit einer einen Kühlmittelverdampfer (54) und einen Stripdampfkondensator (34) aufweisenden Entgasungsanlage (2) für Reaktorkühlmittel (R), **dadurch gekennzeichnet, dass** die bei der Kondensation von Stripdampf (D) im Stripdampfkondensator (34) frei werdende Kondensationswärme in einen Wärmepumpenkreislauf (58) eingebracht und anschließend zumindest zum Teil auf einen den Kühlmittelverdampfer (54) durchströmenden Teilstrom des Reaktorkühlmittels (R) überragen wird, wobei dieses verdampft wird, und bei dem die im Stripdampfkondensator (34) frei werdende Kondensationswärme zuerst auf ein in einem nuklearen Zwischenkühlkreislauf geführtes Strömungsmedium, insbesondere auf das Zwischenkühtwasser (Z), und von diesem anschließend über einen Wärmetauscher (60) auf ein im Wärmepumpenkreislauf (58) geführtes Kältemittel (K) übertragen wird.

8. Verfahren nach einem der Ansprüche 6 bis 7, bei dem als Kältemittel (K) ein fluorierter Kohlenwasserstoff, insbesondere 1,1,1,2-Tetrafluorethan, verwendet wird.

9. Verfahren nach einem der Ansprüche 6 bis 8, bei dem der Betriebsdruck im Inneren der Entgaserkolonne (6) derart eingestellt wird, dass die Siedetemperatur des Reaktorkühlmittels (R) dort im Bereich von 40 °C bis 60 °C, insbesondere bei etwa 50 °C, liegt.

10. Verfahren nach Anspruch 9, bei dem zur Druckregelung über eine Gaszufuhrleitung (42) Gas aus dem Abgassystem der kerntechnischen Anlage in die Entgaserkolonne (6) eingeleitet wird.

11. Verfahren nach einem der Ansprüche 6 bis 10, bei dem die Temperatur des Kältemittels (K) im Wärmepumpenkreislauf (58) vor dem Eintritt in den Kühlmittelverdampfer (54) durch eine Kompressionspumpe (64) auf 60 °C bis 80 °C, insbsondere auf etwa 70 °C, angehoben wird.

## Claims

1. A nuclear engineering plant having a pressurized-water reactor and having a degassing plant (2) for reactor coolant (R), comprising a degasser column (6) through which the reactor coolant (R) can flow, a coolant evaporator (54) with a first heat exchanger (52) and a strip steam condenser (34) with a second heat exchanger (44), wherein a partial flow of the reactor coolant (R) flows through the heat exchanger (52) of the coolant evaporator (54) on the secondary side, and wherein the heat exchanger (44) of the strip steam condenser (34) is switched, on the primary side, into a steam and gas outlet line (32) which is connected to the degasser column (6),
**characterized in that**
the heat exchanger (52) of the coolant evaporator (54) is switched into a heat-pump circuit (58) on the primary side, which heat-pump circuit is coupled to the heat exchanger (44) of the strip steam condenser (34) as a function of the heat flux, which is established during plant operation, in such a way that the heat liberated in the strip steam condensation is transferred at least partially to the reactor coolant (R) flowing through the coolant evaporator (54) and thus leads to its evaporation, wherein the heat exchanger (44) of the strip steam condenser (34) is switched directly into the heat-pump circuit (58) on the secondary side, and wherein the heat-pump circuit (58) includes a controllable bypass line (72) to the heat exchanger (52) of the coolant evaporator (54), into which an excess heat exchanger (68) of an excess condenser (70), switched into a nuclear intermediate cooling circuit on the secondary side, is switched on the primary side.

2. A nuclear engineering plant having a pressurized-water reactor and having a degassing plant (2) for reactor coolant (R), comprising a degasser column (6) through which the reactor coolant (R) can flow, a coolant evaporator (54) with a first heat exchanger (52) and a strip steam condenser (34) with a second heat exchanger (44), wherein a partial flow of the reactor coolant (R) flows through the heat exchanger (52) of the coolant evaporator (54) on the secondary side, and wherein the heat exchanger (44) of the strip steam condenser (34) is switched, on the primary side, in a steam and gas outlet line (32) which is connected to the degasser column (6),
**characterized in that**
the heat exchanger (52) of the coolant evaporator (54) is switched into a heat-pump circuit (58) on the primary side, which heat-pump circuit is coupled to the heat exchanger (44) of the strip steam condenser (34) with respect to the heat flux, which is established during plant operation, in such a way that the heat liberated in the strip steam condensation is transferred at least partially to the reactor coolant (R) flowing through the coolant evaporator (54) and thus leads to its evaporation, wherein a secondary-side outlet of the heat exchanger (44) associated with the strip steam condenser (34) is connected via a connection line (56) with a primary-side inlet of a third heat exchanger (60) switched into the heat-pump circuit (58) on the secondary side, and the connection line (56) forms a partial section of a nuclear intermediate cooling circuit of the nuclear engineering plant.

3. The nuclear engineering plant of any of claims 1 to 2,
**characterized in that**
the heat exchanger (52) of the coolant evaporator (54) is switched on the secondary side into a recirculation line (50), which is connected with its two ends to the degasser column (6) and through which a partial flow of the degassed reactor coolant (R) flows.

4. The nuclear engineering plant of any of claims 1 to 3,
**characterized by**
a gas cooler (36) which is switched in parallel with the strip steam condenser (34) on the coolant side and is switched downstream of said strip steam condenser (34) on the steam and gas side.

5. The nuclear engineering plant of any of claims 1 to 4,
**characterized by**
a vacuum pump (30), switched into the gas and steam outlet line (32), whose sucking power is designed for an operating pressure, prevailing inside the degasser column (6), of less than 0.5 bar, preferably less than 0.2 bar.

6. A method of operating a nuclear engineering plant having a pressurized-water reactor and having a degassing plant (2) for reactor coolant (R), including a coolant evaporator (54) and a a strip steam condenser (34),
**characterized in that**
the condensation heat liberated upon the condensation of strip steam (D) in the strip steam condenser (34) is fed into a heat-pump circuit (58) and then transferred, at least partially, to a partial flow of the reactor coolant (R) flowing through the coolant evaporator (54), whereby said reactor coolant (R) is evaporated, wherein the condensation heat liberated in the strip steam condenser (34) is directly transferred to a refrigerant (K) carried in the heat-pump circuit (58), and wherein the heat-pump circuit (58) includes a controllable bypass line (72) to the heat exchanger (52) of the coolant evaporator (54), into which an excess heat exchanger (68) of an excess condenser (70), switched into a nuclear intermediate cooling circuit on the secondary side, is switched on the primary side, so that excess heat is released via the excess heat exchanger (68) to the nuclear intermediate cooling circuit.

7. A method of operating a nuclear engineering plant having a pressurized-water reactor and having a degassing plant (2) for reactor coolant (R), including a coolant evaporator (54) and a a strip steam condenser (34),
**characterized in that**
the condensation heat liberated upon the condensation of strip steam (D) in the strip steam condenser (34) is fed into a heat-pump circuit (58) and then transferred, at least partially, to a partial flow of the reactor coolant (R) flowing through the coolant evaporator (54), wherein said reactor coolant (R) is evaporated, and wherein the condensation heat liberated in the strip steam condenser (34) is transferred first of all to a flow medium carried in a nuclear intermediate cooling circuit (Z) and then, therefrom, via a heat exchanger (60), to a refrigerant (K) carried in the heat-pump circuit (58).

8. The method of any of claims 6 to 7, wherein the refrigerant (K) used is a fluorinated carbon hydride, in particular 1,1,1,2-tetrafluoroethane.

9. The method of any of claims 6 to 8, wherein the operating pressure inside the degasser column (6) is adjusted such that the boiling temperature of the reactor coolant (R) lies there in the range of 40°C to 60°C, in particular at approximately 50°C.

10. The method of claim 9, wherein, for pressure control, gas from the waste-gas system of the nuclear engineering plant is introduced into the degasser column (6) via a gas feeding line (42).

11. The method of any of claims 6 to 10, wherein the temperature of the refrigerant (K) in the heat-pump circuit (58) is increased, prior to entering the coolant evaporator (54), by means of a compression pump (64) to 60°C to 80°C, in particular to approximately 70°C.

## Revendications

1. Installation technique nucléaire ayant un réacteur à eau sous pression et ayant une installation de dégazage (2) pour du fluide (R) de refroidissement du réacteur, comprenant une colonne de dégazage (6) traversable par le fluide (R) de refroidissement du réacteur, un évaporateur (54) de fluide de refroidissement doté d'un premier échangeur de chaleur (52) et un condenseur (34) de vapeur d'entraînement doté d'un deuxième échangeur de chaleur (44), dans laquelle une partie de l'écoulement du fluide (R) de refroidissement du réacteur traverse l'échangeur de chaleur (52) de l'évaporateur (54) de fluide de refroidissement sur son côté secondaire, et dans laquelle l'échangeur de chaleur (44) du condenseur (34) de vapeur d'entraînement est raccordé par son côté primaire à une conduite de sortie (32) de vapeur et de gaz qui est raccordée à la colonne de dégazage (6),
**caractérisée en ce que**
l'échangeur de chaleur (52) de l'évaporateur de fluide de refroidissement (54) est raccordé par son côté primaire à un circuit (58) de pompe à chaleur, dit circuit de pompe à chaleur étant accouplé à l'échangeur de chaleur (44) du condenseur (34) de vapeur d'entraînement en fonction du flux de chaleur qui s'établit en fonctionnement dans l'installation, de telle sorte que la chaleur libérée par la condensation de la vapeur d'entraînement soit transmise au moins en partie au fluide (R) de refroidissement du réacteur qui traverse l'évaporateur (54) de fluide de refroidissement pour ainsi entraîner son évaporation, dans laquelle l'échangeur de chaleur (44) du condenseur (34) de vapeur d'entraînement est raccordé par son côté secondaire directement au circuit (58) de pompe à chaleur, et dans laquelle le circuit (58) de pompe à chaleur comprend une conduite (72) de dérivation réglable à l'échangeur de chaleur (52) de l'évaporateur (54) de fluide de refroidissement, à laquelle est raccordé par son côté primaire un échangeur de chaleur (68) d'excès d'un condenseur d'excès (70), qui est raccordé par son côté secondaire à un circuit de refroidissement intermédiaire nucléaire.

2. Installation technique nucléaire ayant un réacteur à eau sous pression et ayant une installation de dégazage (2) pour du fluide (R) de refroidissement du réacteur, comprenant une colonne de dégazage (6) traversable par le fluide (R) de refroidissement du réacteur, un évaporateur (54) de fluide de refroidissement doté d'un premier échangeur de chaleur (52) et un condenseur (34) de vapeur d'entraînement doté d'un deuxième échangeur de chaleur (44), dans laquelle une partie de l'écoulement du fluide (R) de refroidissement du réacteur traverse l'échangeur de chaleur (52) de l'évaporateur (54) de fluide de refroidissement sur son côté secondaire, et dans laquelle l'échangeur de chaleur (44) du condenseur (34) de vapeur d'entraînement est raccordé par son côté primaire à une conduite de sortie (32) de vapeur et de gaz qui est raccordée à la colonne de dégazage (6),
**caractérisée en ce que**
l'échangeur de chaleur (52) de l'évaporateur de fluide de refroidissement (54) est raccordé par son côté primaire à un circuit (58) de pompe à chaleur, dit circuit de pompe à chaleur étant accouplé à l'échangeur de chaleur (44) du condenseur (34) de vapeur d'entraînement en fonction du flux de chaleur qui s'établit en fonctionnement dans l'installation, de telle sorte que la chaleur libérée par la condensation de la vapeur d'entraînement soit transmise au moins en partie au fluide (R) de refroidissement du réacteur qui traverse l'évaporateur (54) de fluide de refroidissement pour ainsi entraîner son évaporation, dans laquelle une sortie sur le côté secondaire de l'échangeur de chaleur (44) associé au condenseur (34) de vapeur d'entraînement est raccordée par une ligne de raccordement (56) à une entrée sur le côté primaire d'un troisième échangeur de chaleur (60) qui est raccordé par son côté secondaire au circuit (58) de pompe à chaleur, et la ligne de raccordement (56) forme une section partiell d'un circuit de refroidissement intermédiaire nucléaire de l'installation technique nucléaire.

3. Installation technique nucléaire selon l'une quelconque des revendications 1 à 2,
**caractérisée en ce que**
l'échangeur de chaleur (52) de l'évaporateur (54) de fluide de refroidissement est raccordé par son côté secondaire à une ligne de recirculation (50), qui est raccordé par ses deux bouts à la colonne de dégazage (6) et est traversée par une partie de l'écoulement du fluide (R) de refroidissement dégazé du réacteur.

4. Installation technique nucléaire selon l'une quelconque des revendications 1 à 3,
**caractérisée par**
un refroidisseur de gaz (36) qui est raccordé en parallèle au condenseur (34) de vapeur d'entraînement sur le côté du fluide de refroidissement et qui est placé en aval du dit condenseur sur le côté de vapeur et de gaz.

5. Installation technique nucléaire selon l'une quelconque des revendications 1 à 4, **caractérisée par**
une pompe à vide (30), raccordée à la conduite de sortie (32) de gaz et de vapeur, dont la puissance d'aspiration est dimensionnée pour une pression de service, régnant à l'intérieur de la colonne de dégazage (6), de moins de 0,5 bar, de préférence de moins de 0,2 bar.

6. Procédé de faire fonctionner une installation technique nucléaire ayant un réacteur à eau sous pression et ayant une installation de dégazage (2) pour fluide (R) de refroidissement du réacteur dotée d'un évaporateur (54) de fluide de refroidissement et d'un condenseur (34) de vapeur d'entraînement,
**caractérisé en ce que**
la chaleur de condensation libérée par la condensation de la vapeur d'entraînement (D) dans le condenseur (34) de vapeur d'entraînement est alimentée à un circuit (58) de pompe à chaleur et est alors transmise au moins partiellement à une partie de l'écoulement du fluide (R) de refroidissement du réacteur traversant l'évaporateur (54) de fluide de refroidissement pour ainsi évaporer dit fluide (R) de refroidissement du réacteur, dans laquelle la chaleur de condensation libérée dans le condenseur (34) de vapeur d'entraînement est transmise directement à un réfrigérant (K) contenu dans le circuit (58) de pompe à chaleur, et dans laquelle le circuit (58) de pompe à chaleur comprend une conduite (72) de dérivation réglable à l'échangeur de chaleur (52) de l'évaporateur (54) de fluide de refroidissement, à laquelle est raccordé par son côté primaire un échangeur de chaleur (68) d'excès d'un condenseur d'excès (70), qui est raccordé par son côté secondaire à un circuit de refroidissement intermédiaire nucléaire, de manière que de la chaleur d'excès est dégagée moyennant l'échangeur de chaleur (68) d'excès au circuit de refroidissement intermédiaire nucléaire.

7. Procédé de faire fonctionner une installation technique nucléaire ayant un réacteur à eau sous pression et ayant une installation de dégazage (2) pour fluide (R) de refroidissement du réacteur dotée d'un évaporateur (54) de fluide de refroidissement et d'un condenseur (34) de vapeur d'entraînement,
**caractérisé en ce que**
la chaleur de condensation libérée par la condensation de la vapeur d'entraînement (D) dans le condenseur (34) de vapeur d'entraînement est alimentée à un circuit (58) de pompe à chaleur et est alors transmise au moins partiellement à une partie de l'écoulement du fluide (R) de refroidissement du réacteur traversant l'évaporateur (54) de fluide de refroidissement pour ainsi évaporer dit fluide (R) de refroidissement du réacteur, et dans laquelle la chaleur de condensation libérée dans le condenseur (34) de vapeur d'entraînement est transmise d'abord à un milieu de flux contenu dans un circuit de refroidissement intermédiaire nucléaire (Z) et ensuite, de là, moyennant un échangeur de chaleur (60), à un réfrigérant (K) contenu dans le circuit (58) de pompe à chaleur.

8. Procédé selon l'une quelconque des revendications 6 à 7, dans laquelle le réfrigérant (K) utilisé est un hydrocarbure fluoré, en particulier 1,1,1,2-tétrafluoroéthane.

9. Procédé selon l'une quelconque des revendications 6 à 8, dans laquelle la pression de service à l'intérieur de la colonne de dégazage (6) est réglée de manière que la température d'ébullition du fluide (R) de refroidissement du réacteur là-dedans se trouve dans la gamme de 40°C à 60°C, en particulier à environ 50°C.

10. Procédé selon la revendication 9, dans laquelle, pour le réglage de la pression, du gaz provenant du système de gaz d'échappement de l'installation technique nucléaire est introduit à la colonne de dégazage (6) moyennant une conduite d'alimentation de gaz (42).

11. Procédé selon l'une quelconque des revendications 6 à 10, dans laquelle la température du réfrigérant (K) dans le circuit (58) de pompe à chaleur est augmentée, avant son entrée dans l'évaporateur (54) de fluide de refroidissement au moyen d'une pompe à compression (64), à 60°C à 80°C, en particulier à environ 70°C.
